## Europäisches Patentamt

## European Patent Office

## Office européen des brevets

(19)

(11) Veröffentlichungsnummer: **0 033 065**
**B1**

(12) # EUROPÄISCHE PATENTSCHRIFT

(45) Veröffentlichungstag der Patentschrift:
**08.06.83**

(51) Int. Cl.³: **B 23 D 19/06**

(21) Anmeldenummer: **81100037.1**

(22) Anmeldetag: **07.01.81**

(54) **Verfahren zum Spalten eines Bandes und Spaltanlage für Bänder.**

(30) Priorität: **15.01.80 DE 3001230**

(43) Veröffentlichungstag der Anmeldung:
**05.08.81 Patentblatt 81/31**

(45) Bekanntmachung des Hinweises auf die Patenterteilung:
**08.06.83 Patentblatt 83/23**

(84) Benannte Vertragsstaaten:
**DE FR GB IT NL SE**

(56) Entgegenhaltungen:
**DD-A-128 624**
**DE-A-2 705 167**
**DE-B-1 806 305**
**US-A-2 849 193**
**US-A-3 672 595**

**,,Blech, Rohre, Profile'', Bd. 17, Nr. 8 (1970), Coburg, J. Brockhaus et al. ,,Neues Schneidverfahren zum Erzielen glatter Schnittflächen und gratfreier Kanten'', S. 16 bis 20.**

(73) Patentinhaber: **Sundwiger Eisenhütte Maschinenfabrik Grah & Co, Postfach 740, D-5870 Hemer-Sundwig (DE)**

(72) Erfinder: **Müller, Friedrich, Ing. grad., Teichstrasse 60, D-5870 Hemer (DE)**

(74) Vertreter: **Patentanwaltsbüro Cohausz & Florack, Postfach 14 01 47, D-4000 Düsseldorf 1 (DE)**

## Verfahren zum Spalten eines Bandes und Spaltanlage für Bänder

Die Erfindung betrifft ein Verfahren zum Spalten eines Bandes in mehrere Teilstreifen und anschliessendem Aufwickeln auf eine Aufhaspel, bei dem das Band nach dem Durchtrennen und vor dem Aufwickeln über eine Längenausgleichsstrecke geführt wird.

Eine zur Durchführung dieses Verfahrens dienende Spaltanlage (DE-PS Nr. 1806305, Zeitschrift „Blech", Nr. 8 (1970), „Ein neues Schneidverfahren zum Erzielen glatter Schnittflächen und gratfreier Kanten") besteht aus einer zweistufig arbeitenden Trennvorrichtung (Schere), die mit einem ersten Werkzeug das Band anschneidet und mit einem zweiten Werkzeug das Band in mehrere Teilstreifen durchtrennt, ferner aus einer Aufhaspel für die Teilstreifen und einer der Aufhaspel vorgeordneten Längenausgleichsstrecke, insbesondere Schlingengrube, zum Ausgleich unterschiedlicher Wickelgeschwindigkeiten der Teilstreifen.

Voraussetzung für ein gleichmässiges Aufwickeln der Teilstreifen auf einer Aufhaspel ist, dass sich die unterschiedlichen Wickelgeschwindigkeiten, die sich aufgrund durch unterschiedliche Teilstreifendicke bedingter unterschiedlicher Wickeldurchmesser an der Aufhaspel ergeben, in einer Längenausgleichsstrecke, insbesondere Schlingengrube, ausgleichen können. Ein solcher Ausgleich ist natürlich nur möglich, wenn der Trennvorgang des Bandes in Teilstreifen vollständig durchgeführt ist.

Bei einer bekannten Spaltanlage (DE-OS Nr. 2705167) wird das Band im Konterschnitt, also zweistufig, durchtrennt. Das in Bandlaufrichtung erste Werkzeug schneidet das Band an, während das in Bandlaufrichtung zweite Werkzeug das Band durchtrennt. Zwischen den beiden Werkzeugen ist eine Schlingengrube angeordnet, die das noch nicht vollständig durchtrennte Band im Durchhang durchläuft (Fig. 12). Da das Band an dieser Stelle noch nicht vollständig durchtrennt ist, können die erst nach vollständiger Durchtrennung sich auswirkenden unterschiedlichen Wickelgeschwindigkeiten nicht ausgeglichen werden. Auch ein anderer Ausgleich für die unterschiedlichen Wickelgeschwindigkeiten der Teilstreifen ist bei dieser Spaltanlage nicht vorgesehen.

Bei der bekannten Spaltanlage der eingangs genannten Art (DE-PS Nr. 1806305, Zeitschrift „Blech", Nr. 8 (1970) „Ein neues Schneidverfahren zum Erzielen glatter Schnittflächen und gratfreier Kanten"), bei der die Längenausgleichsstrecke in Laufrichtung des Bandes hinter dem zweiten Werkzeug angeordnet ist, ist es notwendig, die aus dem zweiten Werkzeug kommenden, vollständig voneinander getrennten Teilstreifen des Bandes zu erfassen und über die Längenausgleichsstrecke bis zur Aufhaspel zu führen und dort lagerichtig anzuschliessen. Dies geschieht mit einer Klemmvorrichtung, die mittels eines Wagens von der Trennvorrichtung bis zur Aufhaspel verfahrbar ist. Damit die Klemmvorrichtung verfahren werden kann, ist es erforderlich, dass die zwischen der Trennvorrichtung und der Aufhaspel angeordneten Anlageteile, wie Führungs- und Transportmittel, Richtapparate, Bremsen, Querteilscheren u. dgl., so ausgebildet sind, dass sie aus dem Weg der Klemmvorrichtung und des Wagens verfahrbar sind oder einen Durchlass für diese ermöglichen. Es versteht sich, dass die Berücksichtigung dieser Forderung nach einem freien Verfahrweg für die Klemmvorrichtung einen erheblichen konstruktiven Aufwand erforderlich macht.

Ein weiteres, nicht weniger bedeutendes Problem besteht darin, dass aus Raumgründen die Teilstreifen nach vollständiger Durchtrennung nicht nahe genug am Ausgang des zweiten Werkzeuges von der Klemmvorrichtung erfasst werden können, weil unmittelbar am Ausgang der Trennvorrichtung Mittel zum Ausscheiden der Bandsäume angeordnet sind. Werden die durchtrennten Teilstreifen aber nicht unmittelbar am Ausgang erfasst, spreizen sie sich mehr oder weniger willkürlich. Aus diesem Grunde ist es schwierig, sie exakt von der Klemmvorrichtung zu erfassen. Man versucht diese Schwierigkeiten dadurch zu umgehen, dass man die Teilstreifen einzeln von Hand der Klemmvorrichtung zuführt.

Ferner ist eine Vorrichtung zum Längsteilen von Bändern bekannt, bei der eine Längenausgleichsstrecke für die verschieden dicken Teilstreifen dem gesteckten Ziel entsprechend nicht vorgesehen ist (DD-PS Nr. 128624). Bei dieser Vorrichtung ist die Trennvorrichtung, die das Band bis auf einen Anfangsabschnitt einstufig durchtrennt oder nur anschneidet, und mittelbar vor der Aufhaspel angeordnet. Sofern das Band einstufig durchtrennt wird, müssen nicht näher erläuterte Massnahmen getroffen werden, um die Teilstreifen zumindest teilweise wieder miteinander zu verbinden. Die so geteilten, aber noch oder wieder miteinander verbundenen Teilstreifen werden als Einheit auf eine Aufhaspel aufgewickelt. Die vollständige Durchtrennung kann bis auf die erste Lage (Anfangsabschnitt) des Bandes auf der Haspel während des Aufwickelns oder beim späteren Abwickeln erfolgen. Mit einem solchen Verfahren ist es nicht möglich, die Teilstreifen, die unterschiedliche Dicke haben, stramm aufzuwickeln. Da die Trennvorrichtung unmittelbar vor der Aufhaspel angeordnet ist, stellen sich bei einer solchen Vorrichtung nicht die oben beschriebenen Probleme der Trennvorrichtungen mit Längenausgleichsstrecken.

Endlich ist eine Vorrichtung zum Längsteilen ganz dünner Bänder bekannt, bei der der Anfangsabschnitt des Bandes nicht längsgeteilt wird, sondern unmittelbar vor dem Anschliessen an die Aufhaspel bis zu dem Bereich abgeschnitten wird, an dem das Band längsgeteilt ist. Hierbei besteht die Schwierigkeit, dass die Abfallrandstreifen des Bandes (Bandsäume) bis zum Abschneiden des Bandanfanges mit diesem verbunden bleiben oder durch besonderen Eingriff, in der Regel von Hand, vom Bandanfang abgetrennt werden müssen. In beiden Fällen ist es dann erforderlich, die Bandsäume von Hand in die für das fortlaufende Ausscheiden vorgesehenen Führungsmittel einzubringen. Bei grösseren Bandbreiten und Saumabmessungen entstehen dadurch erhebliche Schwierigkeiten und Verletzungsgefahren für die Bedienungsleute. Ausserdem wird das lagerichtige Anschliessen der Teilstreifen an der Aufwikkelhaspel erschwert, da ein Erfassen der Teilstreifen erst nach Abtrennen der Säume möglich ist.

Der Erfindung liegt die Aufgabe zugrunde, ein Verfahren und eine Anlage zu schaffen, bei der mit weniger Aufwand der Anfang eines Bandes von der Trennvorrichtung zur Aufwickelhaspel transportiert und lagerichtig angeschlossen werden kann. Das Verfahren und die Anlage sollen vor allem für Metallbänder mit einer Materialstärke von über 1 mm bis vorzugsweise 14 mm verwendbar sein.

Diese Aufgabe wird erfindungsgemäss nach dem Verfahren der eingangs genannten Art dadurch gelöst, dass der Anfangsabschnitt des Bandes erst nach Überwinden der Längenausgleichsstrecke unmittelbar vor dem Anschliessen an die Aufhaspel durchtrennt wird, so dass die Teilstreifen nicht mehr miteinander verbunden sind.

Da bei der Erfindung nicht wie bei üblichen Spaltanlagen, bei denen die Längenausgleichsstrecke zwischen der Trennvorrichtung und der Aufhaspel angeordnet ist, der Bandanfang wie das übrige Band vor Durchlaufen der Längenausgleichsstrecke vollständig durchtrennt wird, sondern der Bandanfang im Gegensatz zu dem übrigen Band erst hinter der Längenausgleichsstrecke und damit unmittelbar vor der Aufhaspel vollständig durchtrennt wird, gibt es bei der Erfindung weder die mit dem Transport der Teilstreifenanfänge von der Trennvorrichtung über die Längenausgleichsstrecke zur Aufhaspel noch die mit dem lagerichtigen Erfassen der Teilstreifen am Ausgang der Trennvorrichtung verbundenen Probleme. Bei der Erfindung lässt sich der Bandanfang wegen der noch verbundenen Teilstreifenanfänge so unproblematisch wie ein ungespaltenes Band mit üblichen Mitteln transportieren. Es bestehen auch keine Raumprobleme für das Erfassen der Teilstreifen am Ausgang des Werkzeuges vor der Aufhaspel, da die Bandsäume bereits vor der Durchtrennung der angeschnittenen Teilstreifen ausgeschieden werden und deshalb keine zwischen der Klemmvorrichtung und dem Ausgang der Trennvorrichtung angeordnete Mittel zum Ausscheiden der Teilstreifenanfänge verhindern. Die Teilstreifenanfänge können deshalb unmittelbar am Ausgang der Trennvorrichtung lagerichtig erfasst und lagerichtig in den Aufnahmeschlitz der Aufhaspel eingeführt werden.

Obgleich es grundsätzlich möglich ist, den Bandanfang in Bandlaufrichtung hinter der Längenausgleichsstrecke anzuschneiden und zu durchtrennen, wird nach einer Ausgestaltung der Erfindung bei einem zweistufigen Spalten des Bandes, bei dem das Band mit einem ersten Werkzeug angeschnitten und mit einem zweiten Werkzeug durchtrennt wird, der Anfangsabschnitt des Bandes vor der Längenausgleichsstrecke angeschnitten und hinter der Längenausgleichsstrecke vollständig durchtrennt. Dadurch wird das Ausscheiden der Säume vereinfacht. Zu diesem Zweck können die Saumstreifen vor der ersten Stufe des Spaltens oder unmittelbar danach vom übrigen Band abgetrennt und ausgeschieden werden.

Schwierigkeiten bei der Führung des Bandes von der Abhaspel zur Aufhaspel und beim Ausscheiden der Saumstreifen gibt es nach einer anderen Ausgestaltung des erfindungsgemässen Verfahrens auch bei einem einstufigen Spalten des Bandes nicht, wenn der Anfangsabschnitt des Bandes vor der Längenausgleichsstrecke nur an den Säumen durchtrennt und die Saumstreifen ausgeschieden werden und das anschliessende Band dann auf der gesamten Breite gespalten wird, wobei der Anfangsabschnitt erst nach Überwinden der Ausgleichsstrecke abgetrennt wird.

Für die Durchführung des erfindungsgemässen Verfahrens in seiner ersten Alternative (zweistufiges Spalten) ist eine Spaltanlage geeignet, die eine zweistufig arbeitende Trennvorrichtung (Schere) zum Längsteilen des Bandes in Teilstreifen aufweist, die mit einem ersten Werkzeug das Band anschneidet und es mit einem zweiten Werkzeug vollständig durchtrennt, ferner eine Aufhaspel für die Teilstreifen und eine der Aufhaspel vorgeordnete Längenausgleichsstrecke, insbesondere Schlingengrube, zum Ausgleich unterschiedlicher Wickelgeschwindigkleiten der Teilstreifen. Diese Spaltanlage ist dadurch gekennzeichnet, dass das zweite Werkzeug der Trennvorrichtung über die Längenausgleichsstrecke verfahrbar ist oder dass zwei zweite Werkzeuge vorgesehen sind, von denen eines vor und das andere hinter der Längenausgleichsstrecke angeordnet ist.

Eine Spaltanlage zur Durchführung des Verfahrens in der zweiten Alternative (einstufiges Spalten) weist eine einstufig arbeitende und als Kreismesserschere ausgebildete Trennvorrichtung zum Längsteilen des Bandes in Teilstreifen, ferner eine Aufhaspel für die Teilstreifen und eine der Aufhaspel vorgeordnete Längenausgleichsstrecke, insbesondere eine Schlingengrube zum Ausgleich unterschiedlicher Wickelgeschwindigkeiten der Teilstreifen, auf, und ist dadurch gekennzeichnet, dass die Kreismesserschere gleichzeitig mit Kreismessern grösseren Aussendurchmessers für das Abtrennen der Saumstreifen und mit Kreismessern kleineren Aussendurchmessers für das Längsteilen des übrigen Bandes ausgerüstet ist, und ferner dadurch gekennzeichnet, dass unmittelbar vor der Aufhaspel eine Querschere zum Abtrennen des Anfangsanschnittes angeordnet ist.

Nach einer weiteren Ausgestaltung der zweistufig arbeitenden Spaltanlage ist zwischen dem hinter der Längenausgleichsstrecke angeordneten Werkzeug der Trennvorrichtung und der Aufhaspel eine Spreiz- und Klemmeinrichtung für die Teilstreifen angeordnet, von denen mindestens der Klemmteil in Richtung der Aufhaspel verfahrbar ist. Vorzugsweise sind Klemm- und Spreizteil gemeinsam verfahrbar.

Im folgenden wird die Erfindung anhand einer zwei Ausführungsbeispiele in dimetrischer Darstellung darstellenden Zeichnung näher erläutert. Im einzelnen zeigen

Fig. 1 eine zweistufig arbeitende Spaltanlage, und

Fig. 2 eine einstufig arbeitende Spaltanlage.

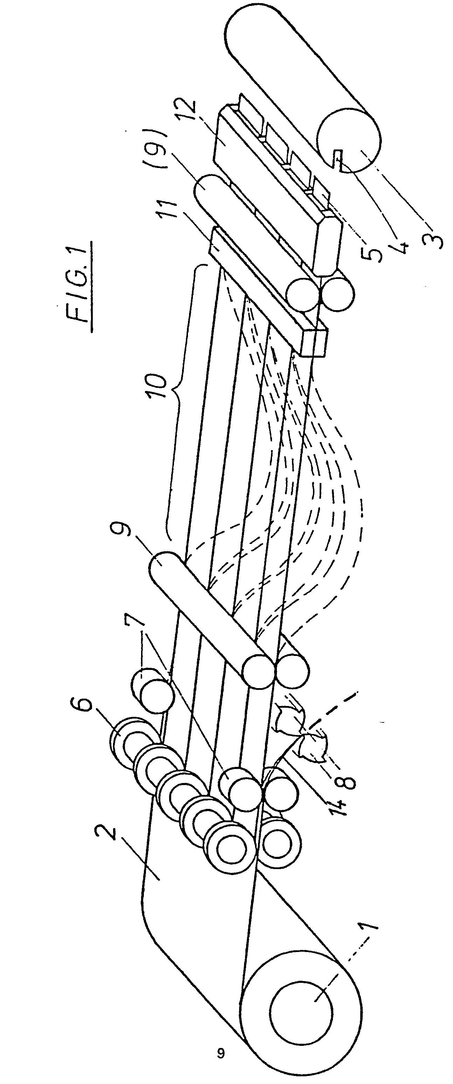

Die Spaltanlage gemäss Fig. 1 weist eine Abhaspel 1 mit einem abzuwickelnden Band 2 und eine Aufhaspel 3 mit einem Aufnahmeschlitz 4 zum Aufwickeln des in Teilstreifen 5 längsgeteilten Bandes 2 auf. Zwischen Abhaspel 1 und Aufhaspel 3 sind in Bandlaufrichtung ein erstes Werkzeug 6 aus mehreren Kreismesserpaaren, an beiden Bandrändern ein Rollenpaar 7 mit nachgeordneten Saumzerstücklern 8 für ausgeschiedene Saumstreifen 14, ein zweites Werkzeug 9, bestehend aus einem sich über die gesamte Bandbreite erstreckenden Walzenpaar, hinter einer Längenausgleichsstrecke 10 eine Streifenbremse 11, ein dem zweiten Werkzeug 9 entsprechendes zweites Werkzeugg (9) aus einem sich über die gesamte Bandbreite erstreckenden Walzenpaar und eine Klemm- und Spreizeinrichtung 12 angeordnet. Die Spreiz- und Klemmeinrichtung 12 besteht aus einzelnen Klemmsteinpaaren, die quer zur Bandrichtung auseinandergezogen werden können, so dass sie voneinander einen bestimmten Abstand haben. Die Spreiz- und Klemmeinrichtung 12 ist zwischen dem zweiten Werkzeug (9) und der Aufhaspel 3 verfahrbar.

Statt zwei zweite Werkzeuge 9, (9) kann auch ein einziges zweites Werkzeug 9 vorgesehen sein. Dieses muss dann allerdings zwischen der in der Zeichnung linken Position und der in der Zeichnung rechten Position verfahrbar sein.

Die erfindungsgemässe Spaltanlage arbeitet auf folgende Weise:

Das Band 2 gelangt mit seinem Anfang in den Wirkungsbereich des Werkzeuges 6, wo die Kreismesserpaare das Band in Längsrichtung mehrfach anschneiden, aber noch nicht durchtrennen. Das Band mit den in der Bandebene verlagerten Teilstreifen gelangt dann mit seinem Saumstreifen 14 in den Wirkungsbereich der Rollenpaare 7, die die Saumstreifen 14 in der Ebene zurückverlagern und dabei die vollständige Durchtrennung der Saumstreifen 14 bewirken. Die Saumstreifen 14 werden nach unten abgelenkt und von Saumzerstücklern 8 in kurze Bandstücke abgetrennt. Das zweite Werkzeug 9 ist zunächst ausser Betrieb gesetzt. Der Bandanfangsabschnitt durchläuft also zusammenhängend die Ausgleichsstrecke 10 und gelangt über die Bremse 11 in den Wirkungsbereich des zweiten Werkzeuges (9). In diesem zweiten Werkzeug (9) werden die Teilstreifen in die Bandebene zurückverlagert, und dadurch wird die vollständige Durchtrennung bewirkt. Unmittelbar am Ausgang des zweiten Werkzeuges (9) werden die Anfänge 5 des durchteilten Bandes 2 von der Klemm- und Spreizeinrichtung 12 erfasst, wobei die Anfänge geringfügig vorne überstehen.

Nach Festklemmen der Anfänge der Teilstreifen 5 wird die Klemm- und Spreizeinrichtung 12 in Richtung der Aufhaspel 3 verfahren. Während des Verfahrens werden die Teilstreifen 5 durch Spreizen der kombinierten Klemm- und Spreizeinrichtung 12 auf den gewünschten gegenseitigen Abstand gebracht. Die Anfänge werden dann in den Aufnahmeschlitz 4 eingestossen und der Aufwickelvorgang kann beginnen.

Nach Passieren des Anfangsabschnittes kann das zweite Werkzeug 9 wirksam werden. Das zweite Werkzeug (9) hinter der Bremse 11 muss solange wirksam bleiben, bis dass das vollständig durchtrennte Band 2 das Werkzeug (9) erreicht hat.

Beim Aufwickeln der Teilstreifen 5 und wirksamer Teilstreifenbremseinrichtung 11 wird sich entsprechend der Dicke der Teilstreifen 5 und dem davon abhängigen Wickeldurchmesser für die einzelnen Teilstreifen 5 ein unterschiedlicher Durchhang in der Längenausgleichsstrecke 10 einstellen. Die Teilstreifenbremseinrichtung 11 gewährleistet, dass die Wickelhärte für sämtliche Teilstreifen 5 gleich ist.

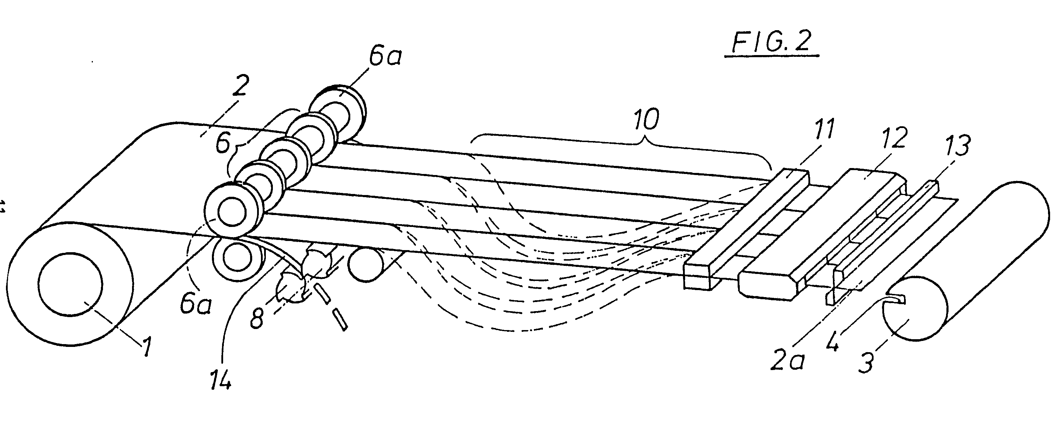

Bei einer alternativen Ausführung mit nur einem einzigen zweiten Werkzeug 9 wird nach Durchtrennen des Anfangsabschnittes des Bandes und Erfassen der Teilstreifenanfänge durch die Klemm- und Spreizeinrichtung 12 das Werkzeug 9 aus der gestrichelten Position in die ausgezogene Position bis vor die Ausgleichsstrecke 10 verfahren. Beim Verfahren bleibt das zweite Werkzeug 9 aber wirksam, so dass das Band ohne Unterbrechung von Anfang an vollständig durchteilt wird. Die Teilstreifenbremseinrichtung 11 kann dabei mit dem Werkzeug 9 verfahren oder aus dem Verfahrweg des Werkzeuges 9 herausgezogen werden. Das Ausführungsbeispiel der Fig. 2 unterscheidet sich von dem Ausführungsbeispiel der Fig. 1 im wesentlichen darin, dass das sich an den Anfangsabschnitt 2a anschliessende Band 2 von den Kreismesserpaaren 6, 6a in einer Stufe durchtrennt wird, die Saumstreifen 14 dagegen beginnend bereits an der Bandvorderkante abgetrennt und ausgeschieden werden und das übrige Band von der Klemm- und Spreizeinrichtung 12 hinter dem ungeteilten Bandanfangsabschnitt 2a erfasst und in Richtung der Aufhaspel 3 gezogen wird, wo der Bandanfangsabschnitt 2a mittels einer Schere abgetrennt wird und die überstehenden gespreizten Teilstreifen in den Aufnahmeschlitz 4 eingestossen werden. Damit die Saumstreifen 14 vor der Ausgleichsstrecke 10 ausgeschieden werden können, haben die äusseren Kreismesserpaare 6a einen grösseren Aussendurchmesser als die inneren Kreismesserpaare 6. Der unterschiedliche Aussendurchmesser der Kreismesserpaare 6a, 6 ermöglicht differenzierte Arbeitsstellungen. Während der Anfangsabschnitt 2a die Kreismesserpaare 6, 6a durchläuft, sind nur die äusseren Kreismesserpaare 6a im Eingriff, und zwar derart, dass die Saumstreifen 14 vollständig abgetrennt werden. Wenn der Anfangsabschnitt 2a die Kreismesserpaare 6, 6a passiert hat, werden die Kreismesser weiter zusammengefahren, so dass auch die mitt-

7 **0 033 065** 8

leren Kreismesserpaare 6 zum Einsatz kommen und das Band im mittleren Bereich spalten.

Es versteht sich, dass auch beim Ausführungsbeispiel der Fig. 1 die äusseren Kreismesserpaare 6 einen grösseren Aussendurchmesser als die inneren Kreismesserpaare haben können, um einstufig die Saumstreifen 14 abzutrennen. In diesem Fall können die Rollenpaare 7 entfallen.

**Patentansprüche**

1. Verfahren zum Spalten eines Bandes (2) in mehrere Teilstreifen (5) und anschliessendem Aufwickeln auf eine Aufhaspel (3), bei dem das Band (2) nach dem Durchtrennen und vor dem Aufwickeln über eine Längenausgleichsstrecke (10) geführt wird, dadurch gekennzeichnet, dass der Anfangsabschnitt des Bandes (2) erst nach Überwinden der Längenausgleichsstrecke (10) unmittelbar vor dem Anschliessen an die Aufhaspel (3) durchtrennt wird, so dass die Teilstreifen (5) nicht mehr miteinander verbunden sind.

2. Verfahren nach Anspruch 1, dadurch gekennzeichnet, dass bei einem zweistufigen Spalten des Bandes (2), bei dem das Band (2) mit einem ersten Werkzeug (6) angeschnitten wird und mit einem zweiten Werkzeug (9) durchtrennt wird, der Anfangsabschnitt des Bandes (2) vor der Längenausgleichsstrecke (10) angeschnitten und hinter der Längenausgleichsstrecke (10) vollständig durchtrennt wird.

3. Verfahren nach Anspruch 2, dadurch gekennzeichnet, dass die Saumstreifen (14) in der ersten Stufe des Spaltens oder unmittelbar danach vom übrigen Band (2) abgetrennt und ausgeschieden werden.

4. Verfahren nach Anspruch 1, dadurch gekennzeichnet, dass bei einem einstufigen Spalten des Bandes (2) der Anfangsabschnitt des Bandes vor der Längenausgleichsstrecke (10) nur an den Säumen durchtrennt und die Saumstreifen (14) ausgeschieden werden und das nachfolgende Band dann auf der gesamten Breite gespalten wird, und dass der Anfangsabschnitt erst nach Überwinden der Ausgleichsstrecke (10) abgetrennt wird.

5. Spaltanlage für Bänder (1) mit einer zweistufig arbeitenden Trennvorrichtung (Schere) zum Längsteilen des Bandes (2) in Teilstreifen (5), die mit einem ersten Werkzeug (6) das Band (2) anschneidet und mit einem zweiten Werkzeug (9) vollständig durchtrennt, ferner mit einer Aufhaspel (3) für die Teilstreifen (5) und einer der Aufhaspel (3) vorgeordneten Längenausgleichsstrecke (10), insbesondere Schlingengrube, zum Ausgleich unterschiedlicher Wickelgeschwindigkeiten der Teilstreifen (5) nach Anspruch (2), dadurch gekennzeichnet, dass das zweite Werkzeug (9) der Trennvorrichtung über die Längenausgleichsstrecke (10) verfahrbar ist oder dass zwei zweite Werkzeuge [9, (9)] vorgesehen sind, von denen das eine (9) vor und das andere [(9)] hinter der Längenausgleichsstrecke (10) angeordnet ist.

6. Spaltanlage nach Anspruch 5, dadurch gekennzeichnet, dass zwischen der Aufhaspel (3) und dem hinter der Längenausgleichsstrecke (10) angeordneten zweiten Werkzeug [(9)] eine Spreiz- und eine verfahrbare Klemmeinrichtung (12) für die Teilstreifen (5) angeordnet ist.

7. Spaltanlage nach Anspruch 6, dadurch gekennzeichnet, dass die Spreiz- und Klemmeinrichtung (12) eine Baueinheit bilden.

8. Spaltanlage nach einem der Ansprüche 5 bis 7, dadurch gekennzeichnet, dass vor der Längenausgleichsstrecke (10) zwischen dem ersten Werkzeug (6) und dem zweiten Werkzeug (9) ein Werkzeug (7, 8) zum Abtrennen der Randstreifen vorgesehen ist.

9. Spaltanlage nach einem der Ansprüche 5 bis 7, dadurch gekennzeichnet, dass das erste Werkzeug (6, 6a) vor der Längenausgleichsstrecke (10) aus Kreismesserpaaren besteht, deren äussere Kreismesserpaare (6a) einen grösseren Aussendurchmesser als die inneren Kreismesserpaare (6) haben.

10. Spaltanlage für Bänder mit einer einstufig arbeitenden und als Kreismesserschere ausgebildeten Trennvorrichtung zum Längsteilen des Bandes in Teilstreifen, ferner mit einer Aufhaspel für die Teilstreifen und einer der Aufhaspel vorgeordneten Längenausgleichsstrecke, insbesondere Schlingengrube, zum Ausgleich unterschiedlicher Wickelgeschwindigkeiten der Teilstreifen, nach Anspruch 4, dadurch gekennzeichnet, dass die Kreismesserschere gleichzeitig mit Kreismessern (6a) grösseren Aussendurchmessers für das Abtrennen der Saumstreifen (14) und mit Kreismessern (6) kleineren Aussendurchmessers für das Längsteilen des übrigen Bandes (2) ausgerüstet ist, und dass unmittelbar vor dem Aufhaspel (3) eine Querschere (13) zum Abtrennen des Anfangsabschnittes (2a) des Bandes (2) angeordnet ist.

**Claims**

1. A method of splitting a sheet (2) into a plurality of strip portions (5) and subsequently winding them on to a winding spool (3), in which after being separated and before being wound up the sheet (2) is fed over a length-adjusting section (10), characterized in that the initial portion of the sheet (2) is separated only after passing through the length-adjusting section (10) immediately before being attached to the winding spool (3), so that the strip portions (5) are no longer joined to one another.

2. A method according to claim 1, characterized in that, in the case of a two-stage splitting of the sheet (2) where the sheet (2) is cut by a first tool (6) and separated by a second tool (9), the initial portion of the sheet (2) is cut in front of the length-adjusting section (10) and completely separated behind the length-adjusting section (10).

3. A method according to claim 2, characterized in that the edge strips (14) are separated from the remaining sheet (2) and removed in the first stage of the splitting or immediately afterwards.

4. A method according to claim 1, characterized in that in the case of a single-stage splitting of the sheet (2) the initial portion of the sheet is only separated at the edges in front of the length-adjusting section (10) and the edge strips (14) are removed and the resulting sheet is then split over its entire width, and the initial portion is separated only after passing through the length-adjusting section (10).

5. A splitting apparatus for sheets (1) with a separating apparatus (cutters) which operates in two stages for dividing the sheet (2) longitudinally into strip portions (5) and which cuts the sheet (2) with a first tool (6) and completely separates it with a second tool (9), and further with a winding spool (3) for the strip portions (5) and a length-adjusting section (10), in particular a loop opening, disposed in front of the winding spool (3) for equalizing different winding speeds of the strip portions (5), according to claim 2, characterized in that the second tool (9) of the separating apparatus may be moved over the length-adjusting section (10), or two second tools [9, (9)] are provided, of which one (9) is disposed in front of and the other [(9)] is arranged behind the length-adjusting section (10).

6. A splitting apparatus according to claim 5, characterized in that a spreading device and a movable gripping device (12) for the strip portions (5) are disposed between the winding spool (3) and the second tool [(9)] disposed behind the length-adjusting section (10).

7. A splitting apparatus according to claim 6, characterized in that the spreading and gripping devices (12) form a structural unit.

8. A splitting apparatus according to any one of claims 5 to 7, characterized in that a tool (7, 8) for separating the edge strips is provided in front of the length-adjusting section (10) between the first tool (6) and the second tool (9).

9. A splitting apparatus according to any one of claims 5 to 7, characterized in that the first tool (6, 6a) in front of the length-adjusting section (10) consists of pairs of circular knives, the outer pairs (6a) of circular knives of which have a greater external diameter than the inner pairs (6) of circular knives.

10. A splitting apparatus for sheets with a separating apparatus operating in one stage and constructed in the form of circular knife cutters for dividing the sheet longitudinally into strip portions, and further with a winding spool for the strip portions and a length-adjusting section, in particular a loop opening, disposed in front of the winding spool for equalizing different winding speeds of the strip portions, according to claim 4, characterized in that the circular knife cutters are simultaneously provided with circular knives (6a) of greater external diameter for separating the edge strips (14) and with circular knives (6) of smaller diameter for dividing the remaining sheet (2) longitudinally, and in that a transverse cutter (13) for separating the initial portion (2a) of the sheet (2) is arranged directly in front of the winding spool (3).

## Revendications

1. Procédé de découpage d'une bande (2) en plusieurs bandes séparées (5), et enroulement subséquent sur un dévidoir (3), dans lequel la bande (2), après le découpage et avant l'enroulement, est guidée sur un parcours d'égalisation de longueur (10), caractérisé par le fait que le tronçon de début de la bande (2) est découpé seulement après le passage du parcours d'égalisation de longueur (10) immédiatement avant le raccordement au dévidoir (3), de sorte que les bandes séparées (5) ne sont plus reliées entre elles.

2. Procédé selon la revendication 1, caractérisé par le fait que, pour un découpage de la bande (2) en deux étapes dans lequel la bande (2) est entamée par un premier outil (6) et est découpée par un second outil (9), le tronçon de début de la bande (2) est entamé avant le parcours d'égalisation de longueur (10) et est complètement découpé après le parcours d'égalisation de longueur (10).

3. Procédé selon la revendication 2, caractérisé par le fait que les bandes de bord (14) sont découpées du reste de la bande (2) et séparées au cours de la première étape du découpage ou immédiatement après.

4. Procédé selon la revendication 1, caractérisé par le fait que, pour un découpage en une seule étape de la bande (2), le tronçon de début de la bande n'est découpé que sur les bords avant le parcours d'égalisation de longueur (10), les bandes de bord (14) sont séparées, la bande suivante est ensuite découpée sur toute sa largeur et le tronçon de début n'est séparé qu'après passage du parcours d'égalisation (10).

5. Dispositif de découpage pour bandes (1) avec un dispositif de découpage (ciseau) travaillant en deux étapes pour la séparation longitudinale de la bande (2) en bandes séparées (5) qui entame la bande (2) au moyen d'un premier outil (6) et la sépare complètement au moyen d'un second outil (9), avec en outre un dévidoir (3) pour les bandes séparées (5) et un parcours d'égalisation de longueur (10), en particulier une fosse à boucles, disposé avant le dévidoir (3) pour l'égalisation de vitesses d'enroulement différentes des bandes séparées (5), selon la revendication 2, caractérisé par le fait que le second outil (9) du dispositif de séparation peut être déplacé sur le parcours d'égalisation (10) ou bien deux seconds outils [9, (9)] sont prévus dont l'un (9) est disposé avant le parcours d'égalisation de longueur (10) et l'autre [(9)] après.

6. Dispositif de découpage selon la revendication 5, caractérisé par le fait qu'un dispositif d'écartement et un dispositif de serrage mobile (12) pour les bandes séparées (5) sont disposés entre le dévidoir (3) et le second outil [(9)] disposé après le parcours d'égalisation de longueur (10).

7. Dispositif de découpage selon la revendication 6, caractérisé par le fait que le dispositif d'écartement et le dispositif de serrage (12) forment une unité de construction.

8. Dispositif de découpage selon l'une des revendications 5 à 7, caractérisé par le fait qu'un outil (7, 8) pour la séparation des bandes de bord est prévu avant le parcours d'égalisation de longueur (10) entre le premier outil (6) et le second outil (9).

9. Dispositif de découpage selon l'une des revendications 5 à 7, caractérisé par le fait que le premier outil (6, 6a) avant le parcours d'égalisation de longueur (10) est constitué par des paires de couteaux circulaires dont la paire extérieure de couteaux circulaires (6a) a un plus grand diamètre extérieur que la paire intérieure de couteaux circulaires (6).

10. Dispositif de découpage pour bandes avec un dispositif de découpage travaillant en une seule étape et constitué par des ciseaux à couteaux circulaires pour la séparation longitudinale de la bande en bandes séparées, avec en outre un dévidoir pour les bandes séparées et un parcours d'égalisation de longueur disposé avant le dévidoir, en particulier une fosse à boucles, pour l'égalisation de vitesses d'enroulement différentes des bandes séparées, selon la revendication 4, caractérisé par le fait que le ciseau à couteaux circulaires est muni simultanément de couteaux circulaires (6a) de plus grand diamètre extérieur et de couteaux circulaires (6) de plus petit diamètre extérieur pour la séparation longitudinale du reste de la bande (2) et qu'un ciseau transversal (13) est disposé immédiatement avant le dévidoir (3) pour la séparation du tronçon de début (2a) de la bande (2).

FIG.1

0 033 065

FIG. 2